# EUROPEAN PATENT APPLICATION

(11) **EP 4 760 663 A1**
(43) Date of publication of application: **17.06.2026**
(21) Application number: 25221896.1
(22) Date of filing: 09.12.2025
(51) Int. Cl.: G07C 5/08, G05B 23/02, G07C 5/00, H04W 4/44

(54) **DIAGNOSTIC DATA MODULE FOR APU AND/OR PROPULSION ENGINE MONITORING**

(30) Priority: 12.12.2024 US 202418978806
(71) Applicant: PRATT & WHITNEY CANADA CORP., Longueuil, Québec J4G 1A1 (CA)
(72) Inventor: MANSOUR, Tarek, Saint-Laurent (CA); SPRENGER, Denis, Montreal (CA)
(74) Representative: Dehns

(57) **Abstract**

A system comprising a sensor (204) connected to an aircraft system (102) configured to monitor an aircraft system characteristic and generate sensor data responsive thereto. A diagnostic data module (DDM) (202) is configured to receive the sensor data from the sensor (104) and transmit the received sensor data from the DDM (202) to a remote monitoring unit. The DDM (202) operates independently of a preexisting data monitoring system (106) of the aircraft system (102).

## Description

### TECHNICAL FIELD

This disclosure relates generally to an aircraft data monitoring system. More specifically, this disclosure relates to a diagnostic data module for providing secondary data monitoring to a legacy aircraft data monitoring system.

### BACKGROUND

Existing aircraft data monitoring systems are implemented within an initial system design. Sensors are located within the aircraft system and collect data that is provided to a system controller that evaluates, interprets and controls the aircraft systems as well as alerts the crew based on control logic programmed within the controller through hardware and software. The addition of sensors to the aircraft system requires significant system redesign and configuration, as well as substantiation efforts, in order to make sure the new sensors do not adversely affect existing operation of the aircraft system or the system controller.

Connections to sensors are provided via a wiring harness that is an assembly consisting of electrical cables which transmit signals throughout a given aircraft system. One common usage of a wiring harness is to obtain data from a sensor. For example, on an aircraft engine, it may be necessary to obtain temperature readings at various locations, as well as measure vibrations in areas that have dynamic response. Since the wiring harness comprises a physical part of an engine assembly, there may be various packaging constraints. It may create unwanted space in an assembly that could be used for other components. One option could be to use wireless connections to obtain data. This can reduce the packaging constraints caused by the harness, while still obtaining the data for analysis.

Also, additions to the system data-gathering package can require new software certification of the controller software. Substantial software certification efforts are required if the sensors are added to an existing aircraft engine controller. Thus, systems not requiring significant changes to system design and software certification would be of great benefit in expanding aircraft system monitoring capabilities.

### SUMMARY

This disclosure relates to an aircraft data monitoring system.

In some examples, the system includes a sensor connected to an aircraft system configured to monitor an aircraft system characteristic and generate sensor data responsive thereto and a diagnostics data module (DDM) configured to receive the sensor data from the sensor and transmit the received sensor data from the DDM to a remote monitoring unit, where the DDM operates independently of a preexisting data monitoring and control system of the aircraft system.

Any single one or any combination of the following features may be used with the examples above. The DDM further may include a memory configured to store the sensor data generated by the sensor. The DDM further includes a transmitter configured to transmit the sensor data generated by the sensor to the remote monitoring unit. The DDM further may include a programmable logic device configured to convert the sensor data from analog format to digital format. The programmable logic device is further configured to analyze the sensor data prior to transmission for maintenance planning for the aircraft system. The programmable logic device is further configured to analyze the sensor data prior to transmission to determine if the sensor data has exceeded a predetermined threshold. The DDM further may include analog logic configured to receive aircraft system control signals and generate a control output responsive thereto and a programmable logic device configured to determine if the sensor data has exceeded a predetermined threshold responsive to the aircraft system control signals and the sensor data. The system may include a legacy data monitoring system configured to monitor a second aircraft system characteristic for the aircraft system and generate second sensor data responsive thereto, and a data analyzer configured to receive the sensor data from the DDM and the second sensor data from the legacy data monitoring system and analyzing operation of the aircraft system responsive to the sensor data and the second sensor data.

In other examples, the method also includes monitoring an aircraft system characteristic using a sensor connected to an aircraft system, generating sensor data responsive to the monitored aircraft system characteristics using the sensor, receiving the sensor data from the sensor at a diagnostic data module (DDM), transmitting the received sensor data from the DDM to a remote monitoring unit using the DDM and operating the DDM independently of a preexisting data monitoring system of the aircraft system.

Any single one or any combination of the following features may be used with the examples above. The method may include storing the sensor data generated by the sensor in a memory of the DDM. The method may include transmitting the sensor data generated by the sensor to the remote monitoring unit using a transmitter of the DDM. The method may include converting the sensor data from analog format to digital format using a programmable logic device of the DDM. The method may include analyzing the sensor data prior to transmission for maintenance planning for the aircraft system using the programmable logic device of the DDM. The method may include analyzing the sensor data prior to transmission using the programmable logic device of the DDM and determining if the sensor data has exceeded a predetermined threshold responsive to the analysis using the programmable logic device. The method further may include receiving aircraft system control signals at analog logic, generating a control output responsive to the aircraft system control signals and determining if the sensor data has exceeded a predetermined threshold responsive to the aircraft system control signals and the sensor data using a programmable logic device. The method may include monitoring a second aircraft system characteristic for the aircraft system using a legacy data monitoring system, generating second sensor data responsive to the monitored second aircraft system characteristics, receiving the sensor data from the DDM and the second sensor data from the legacy data monitoring system at a data analyzer and analyzing operation of the aircraft system responsive to the sensor data and the second sensor data.

In still other examples, the system includes a first sensor connected to an aircraft system configured to monitor a first aircraft system characteristic and generate first sensor data responsive thereto, a second sensor connected to the aircraft system configured to monitor a second aircraft system characteristic and generate second sensor data responsive thereto, a legacy data monitoring system configured to monitor the second aircraft system characteristic for the aircraft system responsive to the second sensor data from the second sensor, a diagnostic data module (DDM) configured to receive the first sensor data from the first sensor and transmit the received first sensor data from the DDM, where the DDM operates independently of the legacy data monitoring system of the aircraft system; and a data analyzer configured to receive the first sensor data from the DDM and the second sensor data from the legacy data monitoring system and analyze operation of the aircraft system responsive to the first sensor data and the second sensor data.

Any single one or any combination of the following features may be used with the examples above. The system where the DDM further may include a memory configured to store the first sensor data generated by the first sensor, a transmitter configured to transmit the first sensor data generated by the first sensor to a remote monitoring unit and a programmable logic device configured to convert the sensor data from analog format to digital format. The programmable logic device is further configured to analyze the sensor data prior to transmission for maintenance planning of the aircraft system. The programmable logic device is further configured to analyze the sensor data prior to transmission to determine if the sensor data has exceeded a predetermined threshold.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a block diagram of an aircraft legacy data monitoring system;
FIGURE 2 illustrates a block diagram of the use of an aircraft legacy data monitoring system in conjunction with a diagnostic data module;
FIGURE 3 illustrates the manner in which data from a diagnostic data module and a legacy data monitoring system can be combined to improve analysis of an aircraft system;
FIGURE 4 illustrates a diagnostic data module;
FIGURE 5 illustrates the various paths of data transfer within the diagnostic data module;
FIGURE 6 illustrates a further embodiment of a diagnostic data module; and
FIGURE 7 illustrates the various paths of data transfer within the further embodiment of the diagnostic data module.

### DETAILED DESCRIPTION

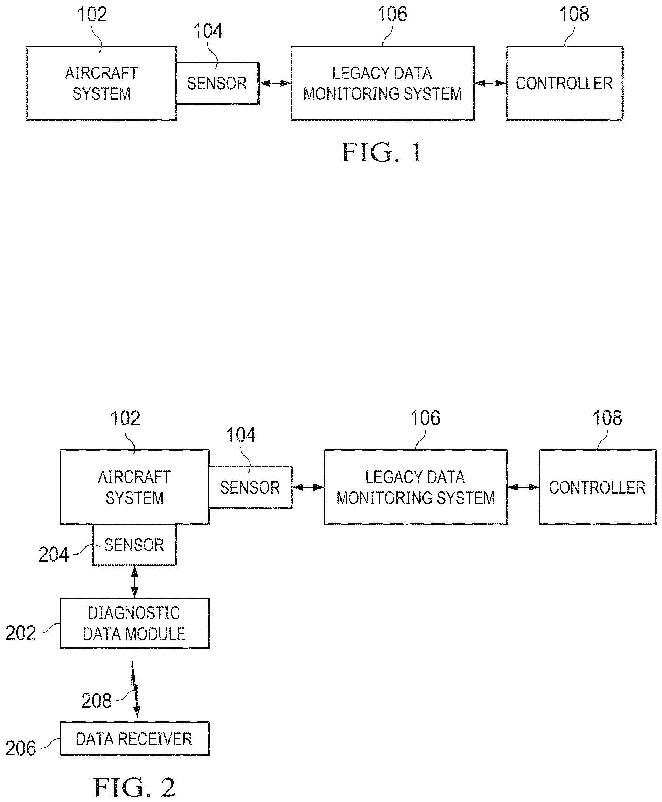

FIGURES 1 through 7, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a block diagram of an aircraft legacy data monitoring system. An aircraft system 102 may comprise any aircraft system such as the engine, electrical system, hydraulic system, cooling system, etc. that is in operation within an aircraft. In existing systems, a sensor 104 may be associated with the aircraft system 102 to monitor a particular condition associated therewith. The data collected by the sensor 104 is provided to the legacy data monitoring system 106 of the aircraft that may then forward the collected data to a particular controller 108 for controlling operations of the aircraft system 102 responsive thereto. As mentioned previously, in order to update the type of information detected by the sensors 104 with respect to the aircraft system 102, a process requiring extensive hardware modifications and software certifications with respect to the controller 108 and legacy data monitoring system 106 would be required.

Referring now to FIGURE 2, there is illustrated a block diagram of an aircraft legacy data monitoring system 106 used in conjunction with a diagnostic data module (DDM) 202. In this implementation, rather than implementing a new sensor 204 and data monitoring capabilities into the existing legacy data monitoring system 106, a separate system is utilized. The separate system consists of the DDM 202 which is connected to receive data from a sensor 204 associated to monitor some type of characteristic, such as temperature or vibrations, within the aircraft system 102. The monitored data from the sensor 204 may then be wirelessly transmitted to a data receiver 206 over wireless communications link 208 from the DDM 202. The data receiver 206 may be a portable unit carried by maintenance personnel or may comprise a remote server to which the monitored data is transmitted. Since the DDM 202 is not incorporated into the existing legacy data monitoring system 106, the use of the DDM does not require approval of hardware upgrades to the existing aircraft system 102 or a software certification with respect to the legacy data monitoring system 106 and controller 108. The DDM 202 comprises a secondary, separate data monitoring system that is independent of the legacy data monitoring system 106.

The DDM 202 enables the introduction of a diagnostic system that is independent of the aircraft system 102. An example of the aircraft system 102 may comprise an auxiliary power unit/propulsion engine and aircraft control system. The DDM 202 can wirelessly transmit data to enable the data to be processed "off wing" for various uses such as engine/aircraft health monitoring. This significantly reduces the certification efforts due to minimal intrusion to the engine/aircraft control systems which have higher design criticality levels that may be compromised by interfacing with the existing legacy diagnostic system. Also, the amount of wiring needed in aircraft system 102 would be minimized. System monitoring can still occur without directly interfering with the control system of the aircraft. The DDM 202 would not raise any faults in the existing wiring harness. Rather, these faults would be raised in a wireless configuration such as to a server or with a Bluetooth connection. The monitoring by the DDM 202 can occur either on the ground or when the aircraft is in the air depending on the monitoring requirements.

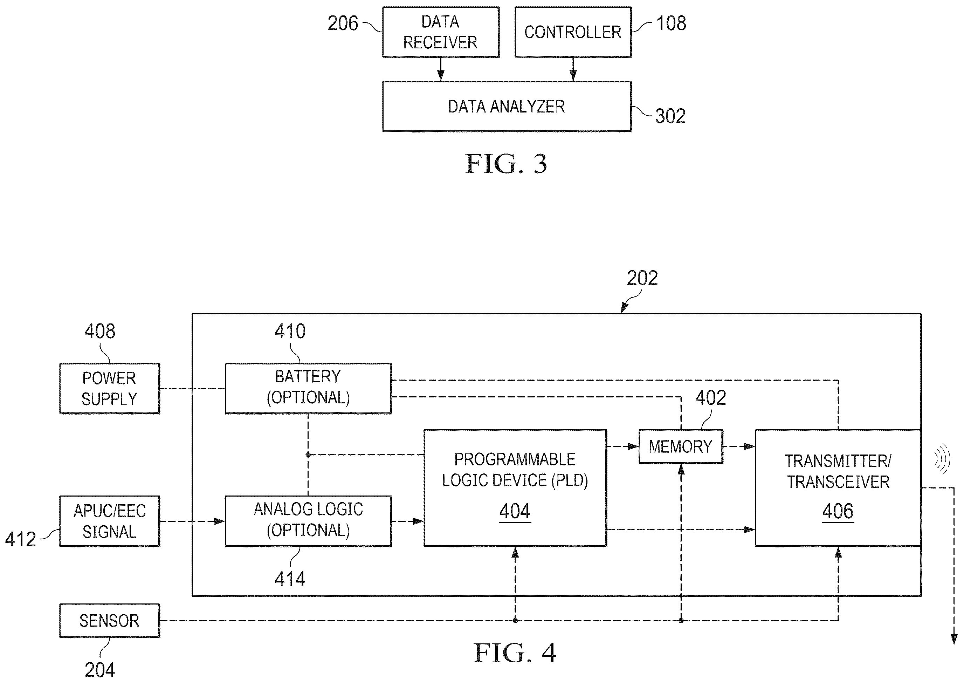

Referring now to FIGURE 3, there is illustrated the manner in which data from the data receiver 206 that has collected data from the DDM 202 and data from the controller 108 that has received data from the legacy data monitoring system 106 may combine the data from the DDM 202 and the legacy data monitoring system 106 to provide improved data analysis at a data analyzer 302. The data analyzer 302 may utilize both the data from the DDM 202 and legacy data monitoring system 106 data in order to provide an improved analysis of the operation of the aircraft system 102. This allows updating an improvement of legacy data monitoring systems 106 without the need for the hardware reconfiguration and software certification that would be necessary if the legacy data monitoring system 106 and controller 108 were updated to monitor the new aircraft system parameters.

Data from the DDM 202 can be combined and synchronized with existing engine/APU (auxiliary power unit) data or aircraft data post-transmission using a post processed off-wing operation to provide a more complete picture of DDM sensor readings in relation to existing data. An example would be correlating vibration data from the DDM 202 with engine speed data from the existing engine data collected by the legacy data monitoring system 106 to see vibration levels at various engine speeds during engine operation.

Referring now to FIGURE 4, there is illustrated a general block diagram of the DDM 202 and associated sensor 204. The purpose of the DDM 202 is to allow aircraft system monitoring using any sensor 204 on existing or new aircraft systems without interfering with the existing aircraft or engine control system. For example, the monitoring of engine vibration and/or exhaust temperature with no impact to the existing control system. The sensor 204 is connected to monitor a characteristic of an aircraft system such as temperature or vibrations. However, it should be realized that any particular characteristic of an aircraft system may be monitored by the sensor 204. The sensor 204 is connected to the DDM 202 and may provide sensor data to a memory 402 or a programmable logic device (PLD) 404. The sensor 204 may be analog, digital or discrete sensors to monitor for any measurable parameter within the aircraft system 102. Additional sensors may be provided to monitor for other characteristics. The memory 402 can store the data directly from the sensor 204. Alternatively, the PLD 404 may convert the sensor data from the sensor 204 into a different format before it is stored within the memory 402.

The PLD 404 may convert analog sensor signals to digital format to allow the information to be written to memory 402 or for direct transmission via the transmitter/transceiver 406. The PLD 404 may include additional functionality to process and analyze the data within the DDM 202 before transmission. For example, the sensor data could be input into a predictive model for maintenance planning or notify operators/OEM when sensor value thresholds are surpassed. Examples of PLDs 404 that may be utilized include microprocessors, microcontrollers, field programmable gate arrays (FPGAs), etc. depending upon the particular application.

The transmitter/transceiver 406 transmits the collected data related to the aircraft system 102 via a communications link to the data receiver 206. The data transmission medium from the transmitter/transceiver 406 may comprise a wireless connection such as cellular, Wi-Fi, Bluetooth etc. Alternatively, the transmission medium may be wired and transmit signals via Ethernet, CAN bus, etc. The sensor 204 may also directly transmit data to the transmitter/transceiver 406 for transmission to the data receiver 206. The transmitter/transceiver 406 may be connected to an external server and tools, such as artificial intelligence, that could be used to process the data and raise flags to aircraft operators based on program limits and machine learning. The transmitter/transceiver 406 may provide varying transmission modes. In a first example the transmitter/transceiver 406 may continuously transmit sensor data when the DDM 202 is powered on. In a second mode, the transmitter/transceiver 406 may transmit data based upon a command from the PLD 404. In a further option, the transmitter/transceiver 406 may transmit data based upon a command received from an external source.

The DDM 202 is powered by a power supply 408 that connects with the DDM 202. This enables all components of the DDM 202 to be powered directly by the external power supply 408. In an alternative embodiment, an onboard battery 410 that is charged by the external power supply 408 allows the DDM 202 to run when the external power supply 408 is removed or disconnected.

The DDM 202 may also use auxiliary power unit controller/electronic engine control (APUC/EEC) signals 412 or other aircraft system control signals to control operation of the PLD 404. For example, engine speed signals can be used as an input to the PLD 404 if the logic processing information is analog (resistors, op apps, transistors, etc.) and if the microprocessor has no impact on the analog logic (read-only). The APUC/EEC signals 412or other aircraft system control signals are provided to analog logic 414 that may provide control signals to the PLD 404.

The above described DDM 202 enables implementation of a diagnostic system that maintains independence between the engine control system and the DDM 202 monitoring the aircraft system 102. By maintaining this independence, the design processes necessary to update the engine control system or other aircraft control systems can be avoided. Thus, the updated systems can be certified more quickly and with less costs. The DDM 202 is adaptable to any post-certified engine that can benefit from monitoring particular system characteristics that were not incorporated into the original certification.

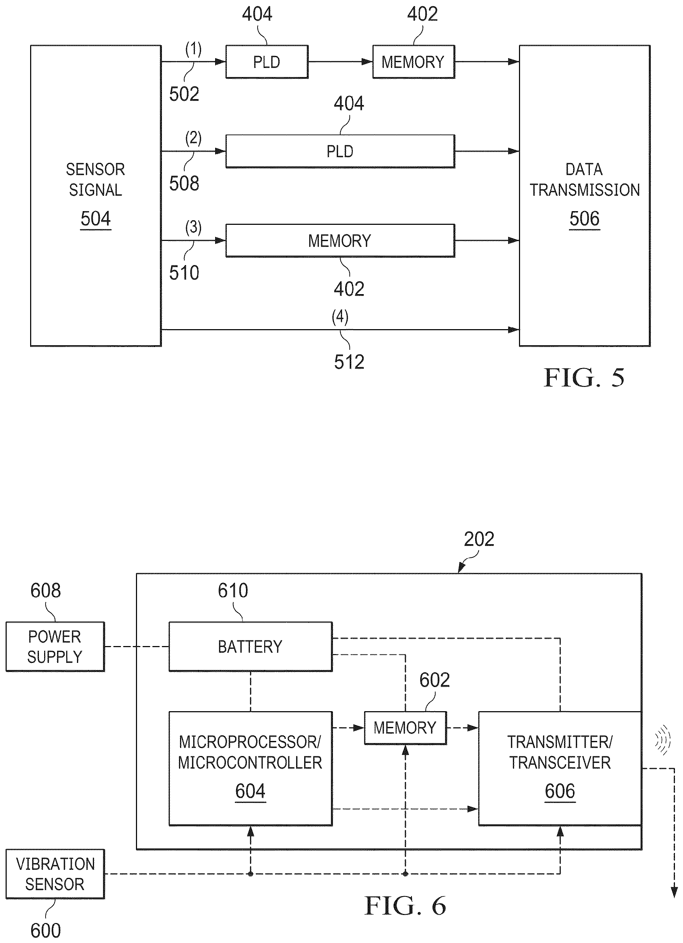

Referring now to FIGURE 5, there are illustrated the various possible paths for the sensor data from the sensor 204 to be transmitted form the DDM 202. In a first path 502, the sensor signals 504 are transmitted to the PLD 404 for conversion and then to the memory 402. The sensor signals 504 in the memory 402 may then be output as a data transmission 506. In a second path 508, the sensor signals 504 are transmitted from the sensor to the PLD 404 and then directly as a data transmission 506 from the PLD 404. In a third path 510, the sensor signals 504 are transmitted directly to the memory 402 before it is transmitted as a data transmission 506. In a final pathway 512, the sensor signals 504 are directly provided as a data transmission 506.

Referring now to FIGURE 6, there is illustrated a block diagram of an alternative embodiment of a DDM 202 and associated vibration sensor 600. The purpose of the DDM 202 is to allow vibration monitoring within an engine using any vibration sensor 600 on existing or new aircraft engines without interfering with the engine control system. The vibration sensor 600 is connected to monitor vibrations of an engine. The vibration sensor 600 is connected to the DDM 202 and may provide sensor data to a memory 602 or a microprocessor/microcontroller 604. The vibration sensor 600 may comprise a contact vibration sensor such as an accelerometer or a noncontact vibration sensor using for example acoustic or laser displacement. The vibration signal from the vibration sensor 600 may comprise an analog signal directly from the sensor or an analog signal converted to digital signal onboard the vibration sensor 600. The memory 602 can store the data directly from the vibration sensor 600. Alternatively, the microprocessor/microcontroller 604 may convert the sensor data from the vibration sensor 600 into a different format before it is stored within the memory 602.

The microprocessor/microcontroller 604 may convert analog sensor signals to digital signals to allow the information to be written to memory or for direct transmission via the transmitter/transceiver 406. The microprocessor/microcontroller 604 may include additional functionality to process and analyze the data within the DDM 202 before transmission. For example, the sensor data could be input into a predictive model for maintenance planning or to notify operators/OEM when sensor value thresholds are surpassed.

The transmitter/transceiver 606 transmit the collected data related to the aircraft engine via a communications link to the external data receiver 206. The data transmission medium from the transmitter/transceiver 606 may comprise a wireless connection such as cellular, Wi-Fi, Bluetooth etc. Alternatively, the transmission medium may be wired and transmit signals via Ethernet, CANbus, etc. The vibration sensor 600 may also directly transmit data to the transmitter/transceiver 606 for transmission. The transmitter/transceiver 606 would then be connected to an external server and tools, such as artificial intelligence, that could be used to process the data and raise flags to aircraft operators based on program limits and machine learning. The transmitter/transceiver 606 may provide varying transmission modes. In a first example the transmitter/transceiver 606 may continuously transmit sensor data when the DDM 202 is powered on. In a second mode, the transmitter/transceiver 606 may transmit data based upon a command from the microprocessor/microcontroller 604. In a further option, the transmitter/transceiver 606 may transmit data based upon a command received from an external source. Once the data is transmitted from the transmitter/transceiver 606 it can be combined and synchronized with existing engine/APU data or aircraft data post-transmission (post-process "off wing") to provide a fuller picture of DDM sensor readings in relation to existing data. For example, the data could be correlating vibration from the DDM 202 with engine speed from the existing engine data to see vibration levels at various engine speeds during operation.

The DDM 202 is powered by a power supply 608 that connects with the DDM 202. This enables all components of the DDM 202 to be powered directly by the external power supply 608. In an alternative embodiment, an onboard battery 610 that is charged by the external power supply 408 allows the DDM 202 to run when the external power supply 608 is removed.

The above described DDM 202 enables implementation of a diagnostic system that maintains independence between the engine control system and the DDM 202 monitoring the aircraft system. By maintaining this independence, the design processes necessary to update the engine control system or other aircraft control systems can be avoided. Thus, the updated systems can be certified or quickly and with less costs. The DDM 202 is adaptable to any post-certified engine that can benefit from monitoring particular system characteristics that were not incorporated into the original certification.

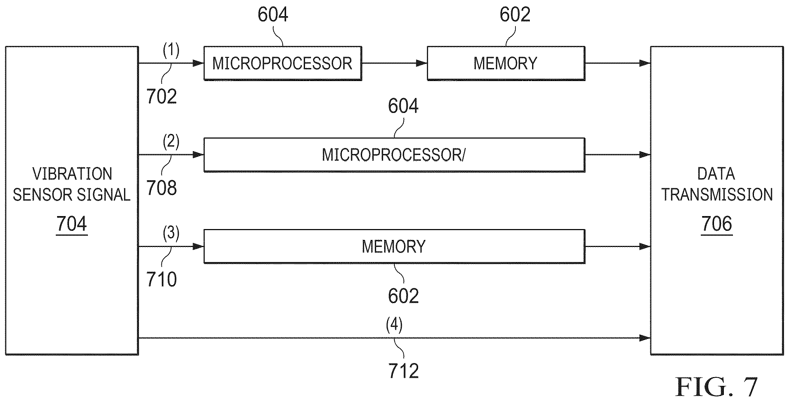

Referring now to FIGURE 7, there are illustrated the various possible paths for the sensor data from the vibration sensor 600 to be transmitted from the DDM 202. In a first path 702, the sensor signals 704 are transmitted to the microprocessor/microcontroller 604 for conversion and then to the memory 602. The sensor signals 704 in the memory 602 may then be output as a data transmission 706. In a second path 708, the sensor signals 704 are transmitted from the vibration sensor 600 to the microprocessor/microcontroller 604 and then as a data transmission 706 from the microprocessor/microcontroller 604. In a third path 710, the sensor signals 704 are transmitted directly to the memory 602 before it is transmitted as a data transmission 706. In a final pathway 712, the sensor signals 704 are directly provided as a data transmission 706.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component", "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system comprising:
a sensor connected to an aircraft system configured to monitor an aircraft system characteristic and generate sensor data responsive thereto; and
a diagnostic data module (DDM) configured to receive the sensor data from the sensor and transmit the received sensor data from the DDM to a remote monitoring unit, wherein the DDM operates independently of a preexisting data monitoring and control system of the aircraft system.

2. The system of Claim 1, wherein the DDM further comprises a memory configured to store the sensor data generated by the sensor, and/or wherein the DDM further includes a transmitter configured to transmit the sensor data generated by the sensor to the remote monitoring unit.

3. The system of Claim 1 or 2, wherein the DDM further comprises a programmable logic device configured to convert the sensor data from analog format to digital format.
[A1]

4. The system of Claims 1 or 2, wherein the DDM further comprises:
analog logic configured to receive aircraft system control signals and generate a control output responsive thereto; and
a programmable logic device configured to determine if the sensor data has exceeded a predetermined threshold responsive to the aircraft system control signals and the sensor data.

5. The system of any one of Claims 1 to 4 further comprising:
a legacy data monitoring system configured to monitor a second aircraft system characteristic for the aircraft system and generate second sensor data responsive thereto; and
a data analyzer configured to receive the sensor data from the DDM and the second sensor data from the legacy data monitoring system and analyzing operation of the aircraft system responsive to the sensor data and the second sensor data.

6. A method comprising:
monitoring an aircraft system characteristic using a sensor connected to an aircraft system;
generating sensor data responsive to the monitored aircraft system characteristics using the sensor;
receiving the sensor data from the sensor at a diagnostic data module (DDM);
transmitting the received sensor data from the DDM to a remote monitoring unit using the DDM; and
operating the DDM independently of a preexisting data monitoring system of the aircraft system.

7. The method of Claim 6 further comprising storing the sensor data generated by the sensor in a memory of the DDM and/or transmitting the sensor data generated by the sensor to the remote monitoring unit using a transmitter of the DDM.

8. The method of Claim 6 or 7 further comprising converting the sensor data from analog format to digital format using a programmable logic device of the DDM.

9. The method of Claim 8 further comprising:
analyzing the sensor data prior to transmission for maintenance planning for the aircraft system using the programmable logic device of the DDM: or
analyzing the sensor data prior to transmission using the programmable logic device of the DDM, and determining if the sensor data has exceeded a predetermined threshold responsive to the analysis using the programmable logic device.

10. The method of Claim 6 or 7 further comprising:
receiving aircraft system control signals at analog logic;
generating a control output responsive to the aircraft system control signals; and
determining if the sensor data has exceeded a predetermined threshold responsive to the aircraft system control signals and the sensor data using a programmable logic device.

11. The method of any one of Claims 6 to 10 further comprising:
monitoring a second aircraft system characteristic for the aircraft system using a legacy data monitoring system;
generating second sensor data responsive to the monitored second aircraft system characteristics;
receiving the sensor data from the DDM and the second sensor data from the legacy data monitoring system at a data analyzer; and
analyzing operation of the aircraft system responsive to the sensor data and the second sensor data.

12. A system comprising:
a first sensor connected to an aircraft system configured to monitor a first aircraft system characteristic and generate first sensor data responsive thereto;
a second sensor connected to the aircraft system configured to monitor a second aircraft system characteristic and generate second sensor data responsive thereto;
a legacy data monitoring system configured to monitor the second aircraft system characteristic for the aircraft system responsive to the second sensor data from the second sensor;
a diagnostic data module (DDM) configured to receive the first sensor data from the first sensor and transmit the received first sensor data from the DDM, wherein the DDM operates independently of the legacy data monitoring system of the aircraft system; and
a data analyzer configured to receive the first sensor data from the DDM and the second sensor data from the legacy data monitoring system and analyze operation of the aircraft system responsive to the first sensor data and the second sensor data.

13. The system of Claim 12, wherein the DDM further comprises:
a memory configured to store the first sensor data generated by the first sensor;
a transmitter configured to transmit the first sensor data generated by the first sensor to a remote monitoring unit; and
a programmable logic device configured to convert the sensor data from analog format to digital format.

14. The system of Claim 3 or 18, wherein the programmable logic device is further configured to analyze the sensor data prior to transmission for maintenance planning of the aircraft system.

15. The system of Claim 3 or 18, wherein the programmable logic device is further configured to analyze the sensor data prior to transmission to determine if the sensor data has exceeded a predetermined threshold.
